(19) Europäisches Patentamt
European Patent Office
Office européen des brevets

(11) **EP 2 304 688 B1**

(12) **EUROPEAN PATENT SPECIFICATION**

(45) Date of publication and mention
of the grant of the patent:
**03.10.2012 Bulletin 2012/40**

(51) Int Cl.:
***G06T 7/00*** (2006.01)

(21) Application number: **09753641.1**

(86) International application number:
**PCT/EP2009/003612**

(22) Date of filing: **20.05.2009**

(87) International publication number:
**WO 2009/143986 (03.12.2009 Gazette 2009/49)**

(54) **AUTOMATED BUILDING OUTLINE DETECTION**

AUTOMATISIERTE GEBÄUDEUMRISSDETEKTION

DÉTECTION DE CONTOUR D'IMMEUBLE AUTOMATISÉE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.05.2008 IE 20080422**

(43) Date of publication of application:
**06.04.2011 Bulletin 2011/14**

(73) Proprietor: **Holger Falter Mechanische Erfindungen
72622 Nürtingen (DE)**

(72) Inventors:
  • **HINKS, Tommy**
    **11635 (SE)**
  • **CARR, Hamish**
    **Co. Dublin (IE)**
  • **LAEFER, Debra**
    **Dublin 4 (IE)**
  • **MORVAN, Yann, Pierre, Joseph**
    **Dublin 4 (IE)**
  • **O'SULLIVAN, Carol, Ann**
    **Dublin 7 (IE)**
  • **TRUONG, Linh Hong**
    **Dublin 14 / IE (IE)**
  • **CERIBASI, Seyit**
    **Kadikoy / Istanbul (TR)**

(74) Representative: **BRP Renaud & Partner
Rechtsanwälte Notare Patentanwälte
Königstrasse 28
70173 Stuttgart (DE)**

(56) References cited:

• **VERMA V; KUMAR R; HSU S: "3D Building Detection and Modeling from Aerial LIDAR Data" COMPUTER VISION AND PATTERN RECOGNITION, 2006 IEEE COMPUTER SOCIETY CO NFERENCE ON NEW YORK, NY, USA 17-22 JUNE 2006, 20060617 - 20060622 PISCATAWAY, NJ, USA,IEEE, vol. 2, 17 June 2006 (2006-06-17), pages 2213-2220, XP010923125 ISBN: 978-0-7695-2597-6**
• **REBECCA (O C) TSE; CHRIS GOLD; DAVE KIDNER ED - ANONYMOUS: "Using the Delaunay Triangulation/ Voronoi Diagram to extract Building Information from Raw LIDAR Data" VORONOI DIAGRAMS IN SCIENCE AND ENGINEERING, 2007. ISVD '07. 4TH INTERNATIONAL SYMPOSIUM ON, IEEE, PI, 1 July 2007 (2007-07-01), pages 222-229, XP031118997 ISBN: 978-0-7695-2869-4**
• **ABDULLATIF ALHARTHY, JAMES BETHEL: "Heuristic Filtering and 3D Feature Extraction from LIDAR Data" ISPRS COMMISSION III, SYMPOSIUM 2002, 9 September 2002 (2002-09-09), - 13 September 2002 (2002-09-13) XP002542676 Graz, Austria**
• **YU, X. AND HYYPPA, H. AND KAARTINEN, H. AND HYYPPA, J. AND AHOKAS, E. AND KAASALAINEN, S.: "Applicability of first pulse derived digital terrain models for boreal forest studies" WORKSHOP ON LASER SCANNING 2005, 12 September 2005 (2005-09-12), - 14 September 2005 (2005-09-14) XP002542677 Enschede, Netherlands**

**(Cont. next page)**

EP 2 304 688 B1

- **KARSTEN JACOBSEN AND PETER LOHMANN: "Segmented Filtering of Laser Scanner DSMs" WORKSHOP 3-D RECONSTRUCTION FROM AIRBORNE LASERSCANNER AND INSAR DATA, 8 October 2003 (2003-10-08), - 10 October 2003 (2003-10-10) XP002542678 Dresden, Germany**

## Description

## Field of the Invention

The present invention provides a method for automatically detecting outlines of buildings using aerially acquired data and enabling further processing of the data as input for computational models.

## Background

Advances in aerial laser scanning technology in recent years have made it a popular choice for rapidly acquiring accurate spatial data for large geographic areas. Digital city modeling is an example of a field where this is increasingly applied. Data for an entire city can be acquired within hours to an accuracy level previously unachievable for that scale. However, due to the large amounts of data produced during aerial scans, coupled with the difficulties of capturing and portraying the complexities of the built environment, many unresolved issues related to the post-processing of laser scanned data remain. One such issue is the important task of reconstructing building surfaces. This step is fundamental in the further processing and utilization of aerial laser scanned data for engineering-based urban modeling.

Aerial laser scanning produces point samples (often collectively referred to as a point cloud). These are collected by a laser scanner mounted underneath an aircraft during a flyover. Point samples are represented as (x,y,z)-tuples, the x and y coordinates can be regarded as a point sample's horizontal position, and the z component as its height. For urban areas, it is not uncommon for the number of point samples to range in the hundreds of millions per square kilometer.

When using the data, working with surfaces is almost always preferable to point samples. However, reconstructing surfaces from a collection of point samples is not straightforward.

Most often, only permanent above-grade manmade objects (e.g. buildings and other permanent structures) are of interest in the surface reconstruction process. This means that any reconstruction method must distinguish between points that are sampled on manmade objects and other points. To this end, being able to identify building walls is a first step towards making this distinction.

Conventional approaches to detecting building walls are based on existing methods in image processing, and these approaches therefore assume that the input is an image. A pixel is the most basic component of a digital image.

In an aerial image, building walls appear as lines. We refer to these lines as building outlines. They may represent a single side or portion of a side of a building or a series of sides or portion of sides that cumulatively constitute an enclosed or partially enclosed space. Building outlines provide some topological information, since point samples not within a building outline are not samples on the surface we are trying to reconstruct. Building surface reconstruction is then based only on the points inside the boundaries set up by the building outlines. For this reason, building outline detection is an important step in all existing surface reconstruction methods for urban areas.

Similarly, aerial laser scans have typically been used to acquire terrain information, represented as a regular square grid of height measurements - thus, conventional processing of aerial laser scans treats the point cloud as an image, with the z value of each point converted to a scalar value for image processing purposes, where pixel intensities are derived from the z-values of the points for image processing purposes. For finer detail, a digital camera is used along with the laser scanner during flyovers to capture color information. A number of photographs are taken during the flyover, and these can be merged and rectified to form a so-called orthophoto. The orthophoto can be thought of as "top-down" view, much like a traditional map. Using the information in this map, building outlines can sometimes be automatically identified. However, in order to merge and rectify aerial photographs into an accurate orthophoto, the underlying geometry has to be known. Thus, the difficulty is that orthophotos are commonly used to determine geometry, but an estimated geometry must be employed during the creation of the orthophoto. Both image processing and orthophotos, however, assume that for any given (x,y) position, only one z position is possible, and that therefore, no vertical overlap of the point samples is possible. This assumption reduces the dimensionality of the data set from 3D to 2.5D, and makes representing strictly vertical surfaces difficult and inaccurate.

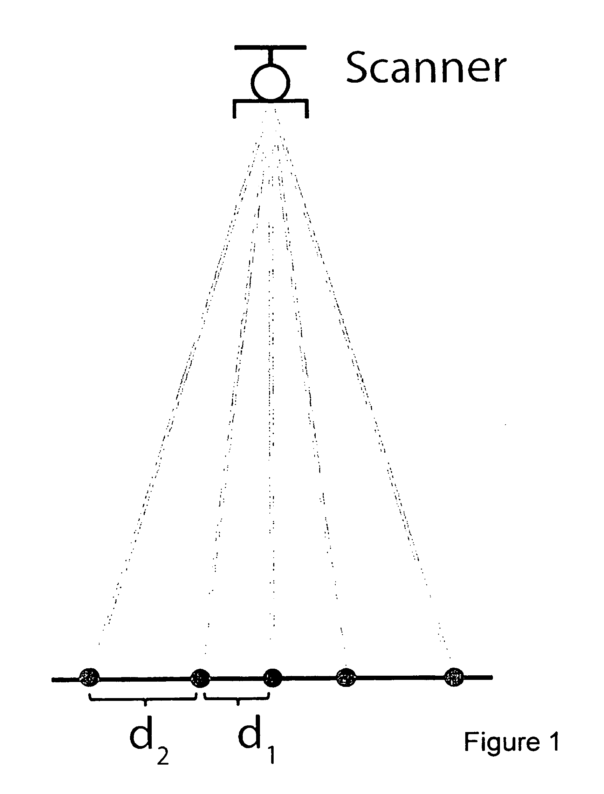

While some existing techniques assume that the data is sampled regularly across a planar grid, this is not always the case. As shown in Figure 1, because the scanner sweeps across the flight path during the scanning process, the data is in fact not sampled regularly. Although such assumptions simplify implementation [e.g. when creating Digital Surface Models (DSM)], resulting surface models are of poor quality. Additionally, such models cannot handle perfectly vertical surfaces (e.g. glass facades). Moreover, both orthophotos and single laser scans suffer from shadowing and occlusion, as the very objects being scanned block acquisition of other objects behind them.

At the same time, laser scan data is acquired with constant angular spacing rather than constant linear spacing. For scan locations relatively close to the target, at significant deflections from the perpendicular, and most particularly for composite datasets acquired from multiple locations, the assumption that the (x,y) locations are evenly spaced in x and y is severely flawed.

For example, some existing approaches apply value thresholds to remove false edges and non-building outlines. A single threshold value used for an entire scene offers little flexibility in handling different types and sizes of buildings, since a lot of guessing and testing is required to find a suitable threshold value, even where a suitable threshold exists.

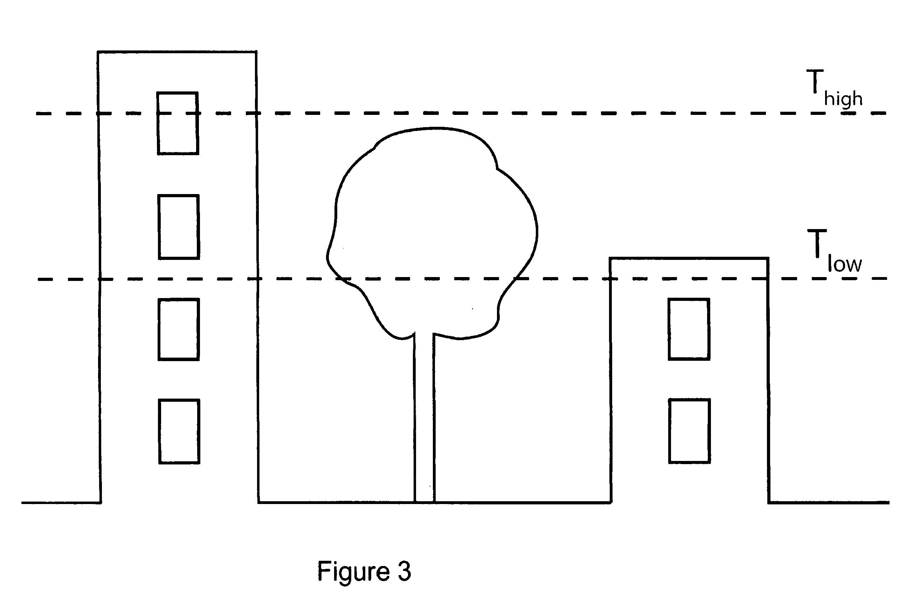

Choosing a suitable threshold value is difficult, because false edges can have higher values than building outlines, and the non-building outlines can have lower values than building outlines. This leads to a situation similar to that depicted in Figure 3, where it is impossible to choose a threshold value that identifies both buildings and discards the tree (i.e. if $T_{low}$ is chosen, points on the crown of the tree will pass the threshold test, and if $T_{high}$ is chosen, points on the lower building on the right will fail the threshold test).

A more sophisticated approach assumes that height differences between neighboring pixels indicate walls. However, the presence of building walls is not the only situation where height differences occur. Hence, many outlines will be found, of which only a small subset are building outlines.

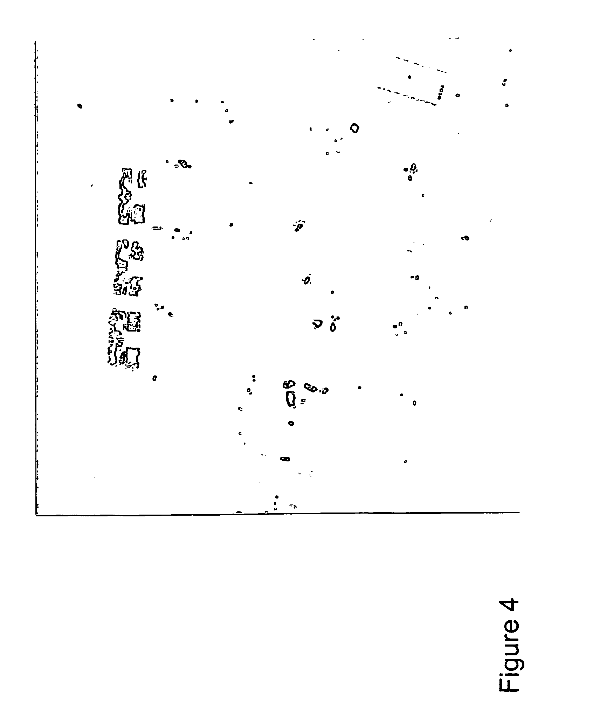

An example of a height difference image is shown in Figure 4 where pixel size is $0.25m^2$ and image dimensions are 500 by 500 pixels.

Here, intensities are proportional to the magnitude of the height difference at each pixel. For building edge detection, height difference magnitudes must be compared to a threshold value, and height differences smaller than this value are rejected as false outlines. As such, processing based on Figure 4 would produce false edges due to missing data (intense spots near the top of the image and scattered in the middle) and non-building outlines (e.g. from vegetation or vehicles in the streets). In any case, it is difficult to pick out the building outlines from this image because of the large number of edges present.

Thus, in either height or height difference images, if a threshold is chosen so that everything higher than or having a height difference greater than 5 meters is classified as part of a building, double-decker buses, billboards, tower cranes, and large trees would all be improperly included. Of course, selecting a higher threshold value would unintentionally exclude single story buildings.

Another segmentation technique known as region growing is also used for orientation thresholding. Here, a pixel on a vertical surface is identified and becomes the initial "seed". The orientation of the surface at the seed pixel is compared to the orientations of the surfaces in surrounding pixels. If the difference in orientation between the seed pixel and its neighbors is smaller than some threshold, the neighbors become seed points in the next iteration. This continues until all pixels have been processed.

Again, region growing methods require threshold values in order to determine, if neighboring surfaces belong to the same region and so, as mentioned above, it is difficult to find a threshold value that performs well for an entire scene.

Scientific articles "3D Building Detection and Modeling from Aerial LIDAR Data" by V.Verma et al., CVPR 2006, and "Using the Delaunay Triangulation/ Voronoi Diagram to extract Building Information from Raw LIDAR Data" by R.Tse et al., ISDV 2007, disclose building outline detection methods from 3D LIDAR point clouds.

## Disclosure of the Invention

According to a first aspect, the present invention provides a method according to claim 1.

The method is robust and flexible as it uses few parameters, relies only on intrinsic geometric features present in the data, can be adapted to a wide range of urban geometries, and is in particular less vulnerable to the weaknesses listed above - viz., shadowing and occlusion, multiple z-values per (x,y) pair, irregular scanning locations, and threshold selection.

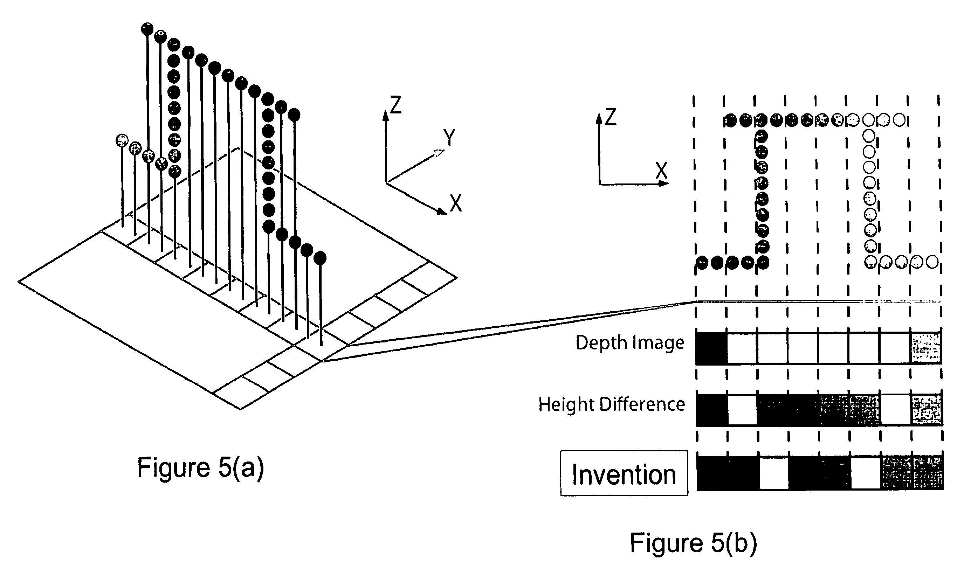

The method provides automatic building outline detection, without manual user boundary identification and without the requirement of users having to optimize a large number of non-intuitive parameters. However, at the same time the method is more flexible than existing approaches that use a minimal set of parameters, because the method allows users to customize functions rather than choosing scalar parameters (e.g. threshold values). Further, the method is not limited by occlusion issues that arise when working with aerial orthophotos. This means building outlines that are occluded when viewed directly from above are still detectable. For instance, some buildings have overhanging roof parts that occlude the facade when viewed from above, Figure 5. If the aerial scan is carried out in such a way that there are samples on building walls, the present method can detect these, despite overhanging obstructions.

In the embodiment, the input provided to the Hough or Radon transform is a new kind of intensity image, which depends not only on minima and maxima values, but on values computed from a set of points and, thus, incorporates inter-relational properties not found in single points.

In a second aspect of the present invention there is provided a method for generating a mesh of elements from aerially acquired building data, said data comprising a plurality of points, each comprising an (x, y,z)-tuple and at least some of which substantially coincide with a surface of a building, said method comprising the steps of:

a) selecting at least a plane within the space occupied by said points;

b) dividing said plane into an array of cells;

c) identifying cells of said array containing more than a threshold number of points; and

d) for each identified cell, generating corresponding data in a mesh file indicating said cell corresponds with a solid surface of a building.

Preferably, said mesh file data comprises data corresponding to the vertices, edges and faces of said identified cells.

Preferably, said selecting at least a plane comprises identifying a boundary of a building as a line in an x,y plane and where said selected plane comprises a plane extending orthogonally upwards from said line.

Preferably, identifying said boundary comprises the steps of the first aspect of the invention.

Alternatively, said method comprises:

voxelizing the space occupied by said points to divide said space into a plurality of cuboids;
selecting cuboids within said space containing more than a threshold number of points; and

wherein said identified cells comprise selected cuboids of said voxelized subspace intersecting with said selected plane.

Preferably, said selecting at least a plane comprises: displaying said selected cuboids graphically; and defining said at least a plane within said display.

**Brief Description of the Drawings**

Embodiments of the invention will now be described, by way of example, with reference to the accompanying drawings, in which:

Figure 1 shows laser pulses are emitted at regular angular intervals from the scanner, but the spacing d2, d1 between the point samples on the ground is not regular;
Figure 2 shows schematically the processing steps of a) a first embodiment of the invention; and b) an alternative embodiment including additional processing of point cloud information prior to feature extraction;
Figure 3 illustrates the difficulty of choosing a single threshold for a scene;
Figure 4 shows an image where a conventional height difference filter has been applied to the data set before building outline detection;
Figure 5(a) shows a section of a building with overhanging roof parts in relation to a reference plane; and Figure 5(b) shows conventional depth or height difference based segmentation methods erroneously identify building walls at incorrect locations vis-à-vis the present invention;
Figure 6 shows an overview of a method for automatically detecting outlines of buildings using aerially acquired data according to a first embodiment of the invention;
Figure 7(a) is a perspective view of a collection of point samples in relation to the image plane onto which they are mapped; and Figure 7(b) shows a top view for two different pixel resolutions, higher resolution leading to smaller pixels and thus less points per pixel;
Figure 8 illustrates the input parameters to a discrimination function for an embodiment of the present invention;
Figure 9 illustrates an image processed according to a first embodiment of the present invention;
Figure 10 illustrates image plane orientation being varied in order to extract planes that are not vertical;
Figure 11 shows a single scan line along with the relationship between pulses and returns; and
Figure 12 shows in elevation, point cloud information obtained for the surfaces of a set of buildings of a street similar to that of Figure 9; and
Figure 13 shows the results of FEM analysis of the elements of a building surface identified according to a second aspect of the present invention.

**Description of the Preferred Embodiments**

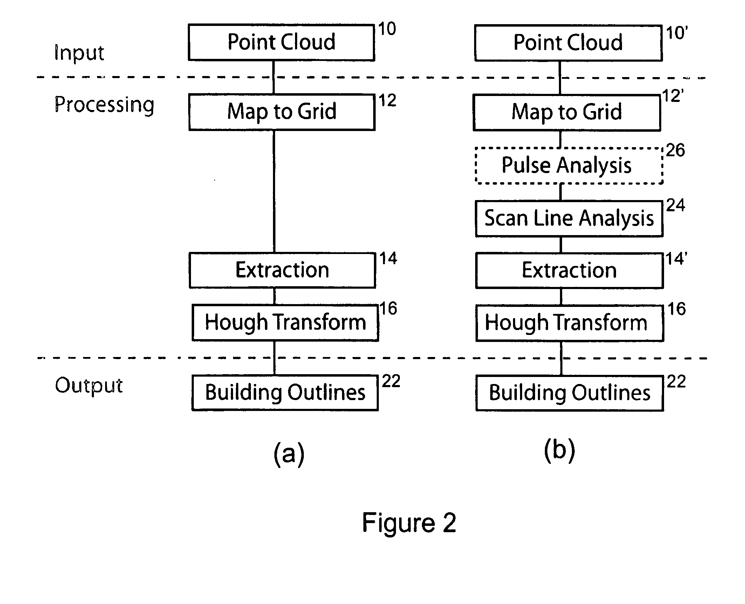

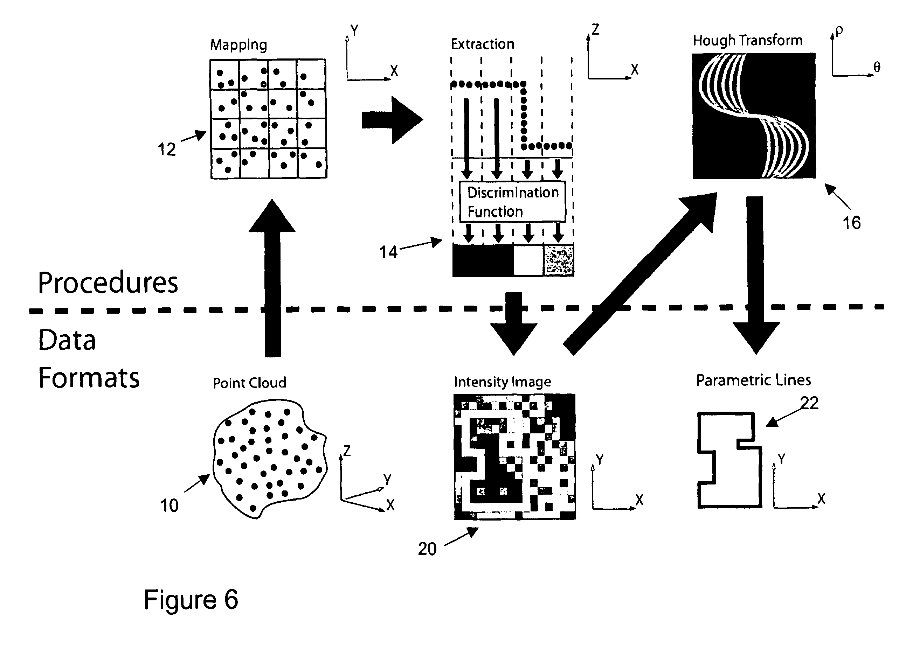

Referring now to Figures 2 and 6, embodiments of the present invention take a point cloud 10 generated during an aerial laser scan of a city as the data input.

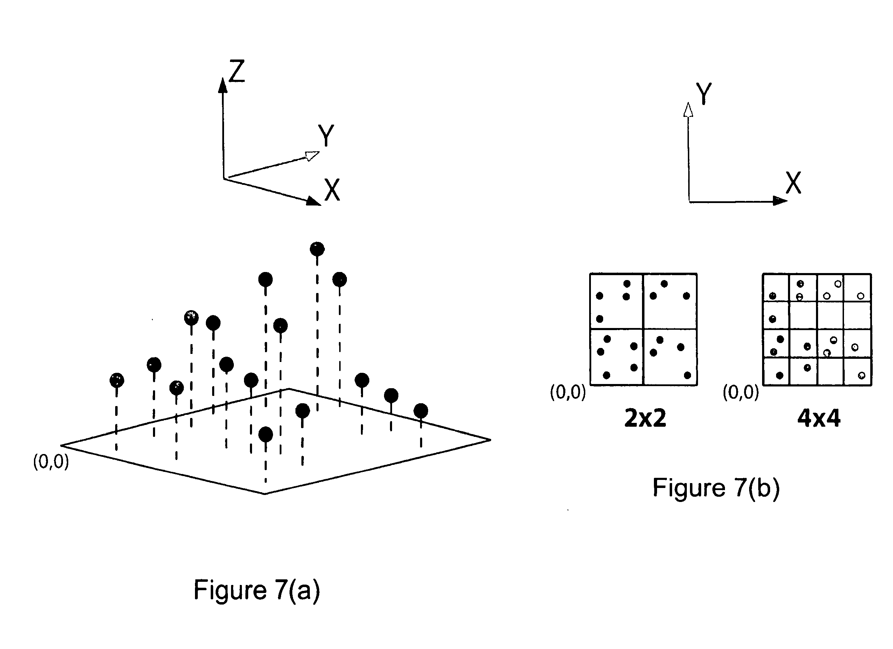

In a first embodiment, shown on the left of Figure 2, the first processing step 12 involves mapping all the point samples to so-called bins, Figure 7, each of which is a small square region in a reference plane, which may be the presumed level of the ground. In the embodiments, the reference plane is arranged so that its dimensions cover the entire horizontal extent of the point cloud. Consequently, bins have a certain geographic area, related to the number of bins into which we chose to divide the reference plane. It will be seen that a large number of bins corresponds to each bin covering a smaller area of the reference plane.

The mapping subdivides the point cloud into smaller groups of points. The grouping is based on the x- and y-coordinates of the points on the reference plane. Points mapped to the same bin belong to the same group. The bin size is selected with respect to the level of detail on objects represented by the point cloud. If the point cloud is sparse and bin resolution is high, many bins will have no or only a few points mapped to them. Optimally, bins contain enough points to allow the subsequent stages of the method to identify vertical surfaces robustly. As such, the choice of bin resolution can, therefore, be an input parameter to software implementing the method.

In order to apply existing image processing techniques, an image is then constructed, in which each pixel comprises summary information in the form of one or more scalar values, computed from the points in a single bin using a "discrimination function", step 14. In one embodiment, the following discrimination function is used:

$$f_D(n, \Delta z) = \frac{ne^{(\Delta z / \Delta z \max)}}{n_{\max}}$$

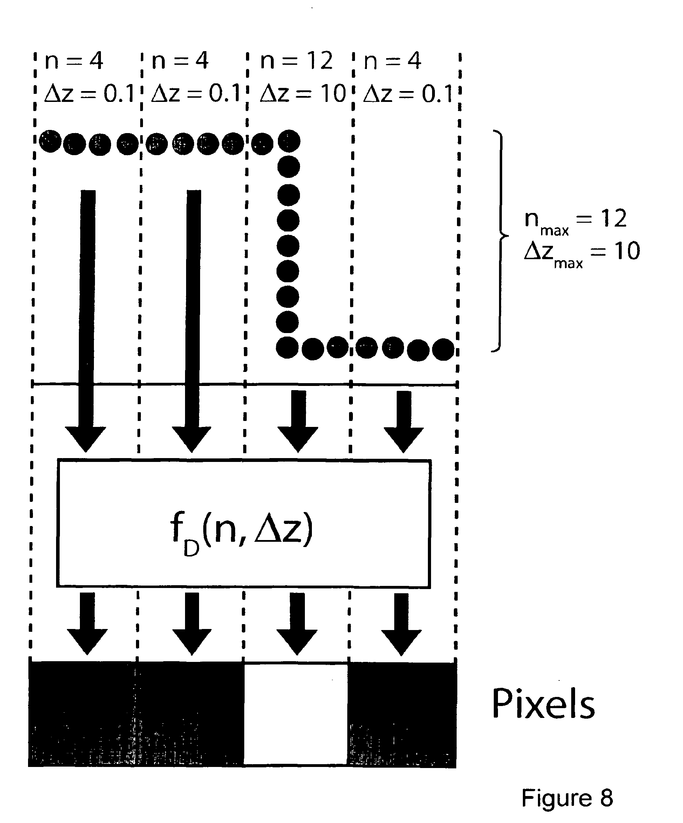

where n is the number of points mapped to the bin, $\Delta z$ is the height difference between the lowest and the highest points in the bin, $n_{\max}$ is the maximum number of points found in any bin, and $\Delta z_{\max}$ is the largest height difference found in any bin, Figure 8. In this case the discrimination function depends on the point count and height difference only.

It will be seen that the above definition is used for clarity and simplifies notation and other more formal definitions of the discrimination function can be defined with reference to the mapped points as input from each bin.

In any case, it should be noted that both the point count and the height difference are properties of the mapped points.

This function requires only a set of points as its input, i.e. no external data, for example, building ground plans are required. The discrimination function is designed to assign more intense values to pixels in an intensity image 20, Figure 6, where the points belonging to the corresponding bin are sampled from building walls. For each bin of the grid, we apply the discrimination function to the corresponding bin of the reference plane, and assign the resulting scalar value to the pixel. As such, a set of pixels, each with a scalar value, is known as an intensity image 20, Figure 6. This procedure reduces the dimensionality of the extraction problem from three dimensions to two.

Additionally, unwanted data (e.g. samples on vegetation) are deemphasized, because low intensities are assigned to pixels, where the points in the corresponding bin do not indicate the presence of vertical surfaces. For instance, consider a bin containing ten points, all of which are close to ground level, with the simplistic assumption that ground level is the plane in three-dimensional space where the z-component equals zero. Therefore, it seems unlikely that these points were sampled on a vertical surface, since one of the characteristics of points sampled on a vertical surface is that they are distributed in the vertical direction, and not in the horizontal plane. Thus, a low intensity is assigned to the pixel in the image 20. While this is an oversimplified case, it exemplifies the principle of the function.

The final step in transforming the intensity image produced by the discrimination function to building outlines is accomplished by applying the so-called Hough or alternatively Radon transform to the pixels in the intensity image, step 16. The Hough or Radon transforms work by taking each pixel and transforming the location of the pixel within the image and its intensity to a so-called parameter space. Within this space, the equations describing the lines (22) present in the intensity image can be extracted.

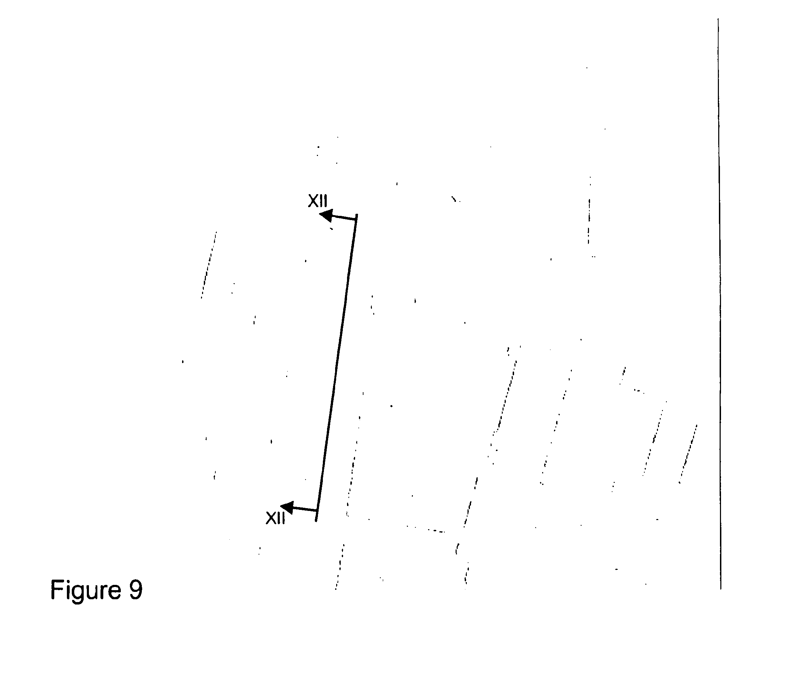

The data set used to produce the image of Figure 9 is part of a larger data set captured during a flyover of the city of Dublin. The entire data set covers an area of six square kilometers and the subset of Figure 9 is a 250 by 250 meter area located in the central parts of the city. Bin size is $0.25m^2$ and image dimensions are 500 by 500 pixels. The flyover was conducted with sampling quality on vertical surfaces especially in mind. However, the present method is not dependent on this kind of optimization and will work on any data set containing point samples on building walls. Figure 9 shows promising results, as building outlines are clearly distinguished from their surroundings. Also note that little or no false outlines are highlighted in Figure 9 by comparison with Figure 4.

Further implementations of the invention can develop the discrimination function further to make it more robust. For example, flight path information which is normally available from the party conducting the scanning can be used to predict the expected number of point samples within a bin. Being able to predict the expected number of point samples within a bin enables $n_{\max}$, the threshold number of points within each bin to be set robustly or even to be set dynamically.

The above described discrimination function assigns larger intensities within the image 20 to pixels whose corresponding bins have large point counts and large height differences. Further, the height difference is an exponential term, giving it more importance. The main reason for this is that the spatial irregularity of the point samples make the point count a less robust measure. This problem arises directly beneath the scanner, where point counts are high, without a substantial presence of vertical surfaces. Off to the sides, point density decreases on horizontal surfaces, but the presence of a vertical surface will again raise the point density. Consequently, a large point count can either be a horizontal patch directly beneath the scanner, or a vertical surface, making the point count a somewhat ambiguous measure. It should also be noted that, at this stage, the positions of all the points are not yet taken into account. Since only the minima and maxima values are used, tree crowns are assigned intense values, even though there is a gap between ground samples and maxima values.

Therefore, in alternative implementations, the fact that building walls have point samples at predictable intervals all the way from bottom to top can be exploited.

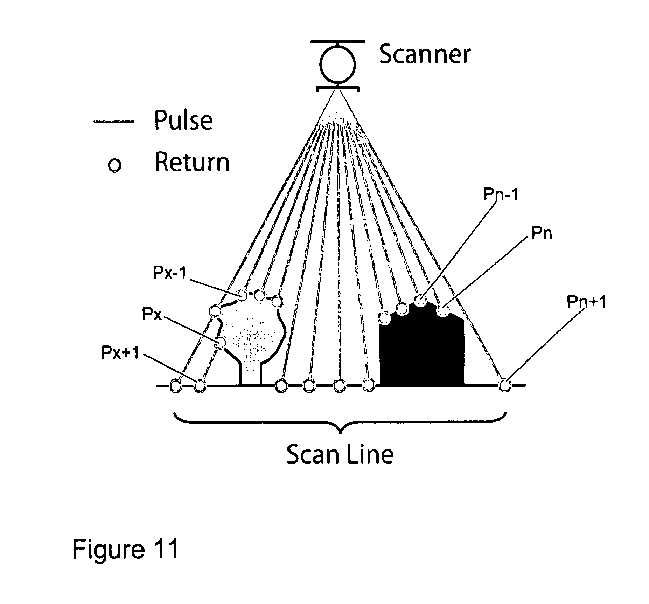

Further alternative implementations can also make use of additional information contained within a point cloud 10', Figure 2, as well as knowledge of how scanning is performed to obtain the point cloud. As shown in Figure 11, as an aircraft moves during a flyover, point samples are collected in a sweeping fashion through periodically offsetting emitted laser pulses at fixed angular increments in the across-track direction. Point samples are collected on both sides of the scanner. A single sweep, from side to side, is referred to as a "scan line", and current laser scanners are capable of performing hundreds of sweeps per second. Within a point cloud, point samples collected in the same scan line can have identical time-stamps.

Using this information, in alternative embodiments of the invention shown on the right of Figure 2, in addition to or as an alternative to analyzing all points of a point cloud amalgamated from all sweeps during a flyover as in the first embodiment, points belonging to the same scan line are grouped together and analysed as respective units. Thus, in these embodiments, the mapping step 12' by comparison to the mapping of Figures 6 and 7 involves only mapping the points from respective scan lines to the grid, before applying 14' the discrimination function to bins of the grid in which points of that scan line lie. Alternatively, this can be carried out in parallel by mapping point samples to reference plane bins and noting their time-stamps such that each scan line is analysed as a separate group of points.

In any case, building wall segments present in a single scan line show up as a series of point samples stacked in height. By examining the point sample contents of regular intervals in the across-track direction of scan lines, portions of the scan line can be determined to belong to a building wall. Each point in such a stack is classified as being part of a building wall segment.

It will be seen that this separate analysis of scan line information overcomes the problem of non-uniform scanning density across an imaged area through overlapping pulse return information from adjacent scanning tracks. Thus, even though the basic discrimination function overcomes the difference in high point density acquired from directly beneath a scan track vis-à-vis lower density to the side of the track, it can still be beneficial to analyze scan line information separately as well as or as an alternative to analyzing the amalgamated point cloud.

The information resulting from the analysis of the individual scan lines and/or the amalgamated point cloud is mapped to the reference plane bins, where it is consolidated and further processed, leading to extraction of partial or complete building outlines 22.

In one example of further processing used with the alternative embodiment described above, where a given bin of the grid is indicated as belonging to a wall through applying the discrimination function to the points of more than one scan line, the discrimination function can produce a higher weighted value for that bin.

As mentioned above implementations of the present invention can include further processing of scan line information, for example, making use of point cloud information being arranged such that the order of return points for a scan line corresponds directly to the order in which they appear for each pulse. In some implementations, this is used to detect pulses which produce no returns at all, in which case not enough energy was reflected back to the scanner, resulting in loss of data. Typically this occurs if a pulse impinges on a glass or metal surface.

Thus, in these implementations of the present invention, prior to analysis of scan lines with the discrimination function at step 14', the pulses of each scan line are examined, step 24. If one or more pulses failed to detect any returns at all, this shows up as angular offsets for which there is no point data. Because pulses are emitted at regular angular intervals, it is possible to insert artificial pulses to account for loss of data due to the laser striking highly-reflectant materials, such as metal or glass. Missing pulse returns are artificially reconstructed by assuming piece-wise linearity between the previous and following existing pulses, and then finding the intersection along this line from a ray emitted from the scanner at the angle of the missing pulse. It has been found that including such additional points within the point cloud has improved the quality of result provided by such implementations. So with reference to Figure 11, if the point Pn where a pulse impinged on a roof comprises a rooflight, no return might be obtained for that pulse. Thus, in this implementation, the location of pulse returns Pn-1 and Pn+1 could be interpolated to provide an estimate (in this case relatively accurate, although not necessarily so) for the return Pn. Of course any interpolation method could be employed including linear, spline or polynomial interpolation using any suitable adjacent number of points.

It will also be appreciated that even though each pulse return has the same time stamp, as their acquisition sequence is known, the relative timing of the points either within the scan line per se; or by contrast to the relative timing of points from other scan lines could be used in further adaptations of the invention to infer information about building surfaces.

It can also be the case that energy from a single emitted laser pulse is reflected back to the scanner from multiple surfaces. Each return from each surface is recorded as a separate point sample and thus several point samples may be recorded for a single pulse. Typically this happens when a pulse passes through vegetation, such as pulse returns Px-1, Px and Px+1 of Figure 11.

Thus in some implementations of the invention, pre-analysis filtering of such pulse returns, step 26, can be used to indicate locations in the reference plan or bins which are more likely to include vegetation in spite of the discrimination function being satisfied for that location/bin.

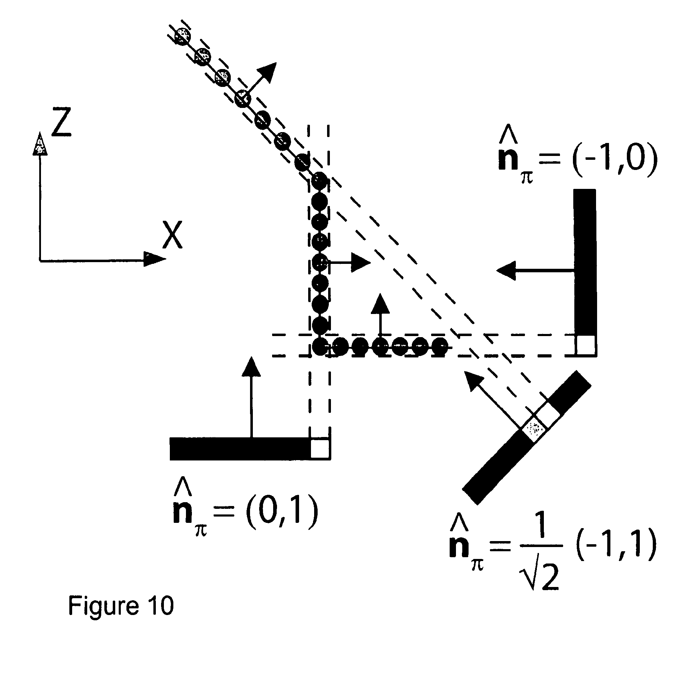

It will also be seen that the invention can be employed to perform segmentation for any arbitrary reference plane, by aligning the plane correspondingly. In Figure 10, each reference plane has an associated normal ($\hat{n}_\pi$) which describes the plane orientation. Further, for each reference plane a highlighted pixel is calculated according to the invention and indicates that the point distribution in this pixel is likely to be on a surface of interest. Using vector notation, this reasoning can easily be extended to 3D.

Thus, the present method extracts surfaces whose orientation is perpendicular to the normal of the reference plane, and extracting vertical surfaces is a special case of this more general formulation that occurs when the reference plane normal is parallel to the z-axis (i.e. the image plane is horizontal).

The more general formulation permits extraction of surfaces perpendicular to any reference plane. For instance, roof planes might be extracted from a reference plane at a 45° angle to the top of a wall. Moreover, the general method of mapping rich information to bins may be performed on any arbitrary plane, such as a wall plane. Thus, by applying the formulation twice, it is possible first to extract planes, then to map points from the cloud onto the wall planes, which is used as the basis of the claim relating to generating FEM models (below).

In embodiments other than detection of wall planes, it is likely that the discrimination function would have to be further customized. The reason for this is that the point distribution within the bins varies drastically as the image plane orientation changes. Also, it might be possible to customize the discrimination function to detect vegetation or other classes of objects present in aerial laser scan data sets.

It will be seen from the embodiments described above, that the present invention provides a useful mechanism for identifying building wall outlines from point cloud information. As well as mapping image information to surfaces extending from such building outlines, the invention can be used for many alternative applications.

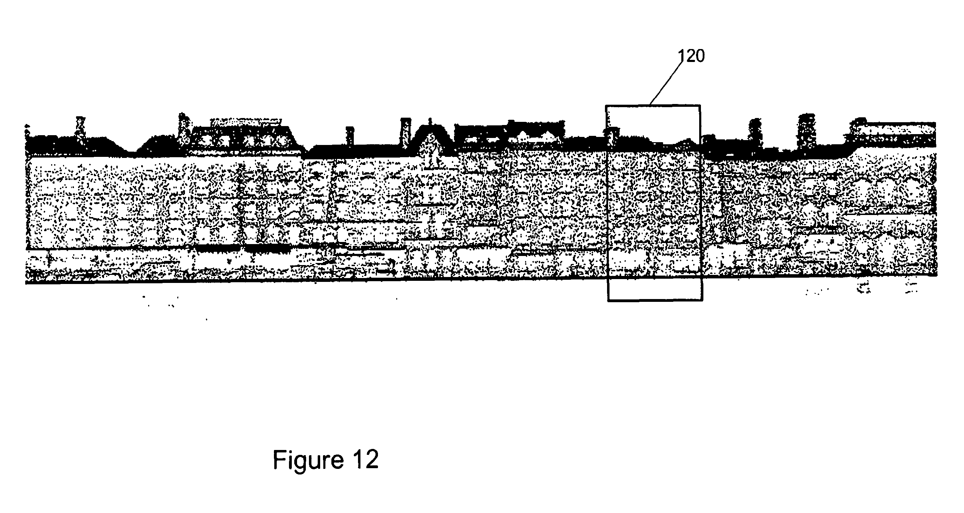

Referring now to Figure 9, using the embodiments of the invention described above, the boundaries in the x,y plane of the *various* buildings of the street facing the line XII-XII can be determined. Figure 12 shows in elevation, point cloud information obtained for the surfaces of a set of buildings of a street similar to that of Figure 9. It will be noted that relatively little information is returned for the areas of the building facades comprising glass or highly reflective metal.

While the inclusion of artificial pulse information as outlined in step 26 above can be useful in determining the boundaries of the buildings shown in Figures 9 and 12, these additional pulses are not necessarily included for the applications described below.

These applications include the Finite Element (FE), Finite Difference (FD) or Discrete Element (DE) analyses of building information. Typically, to derive meshes for these computational approaches from the point cloud information would involve creating a mesh from a set of edges, vertices and faces of all the triangles linking all the points deemed to reside on the surface of a building. In the case of the building outlined at 120 in Figure 12, there will be many points located on the surface of the building and so, it could be extremely difficult to ensure that correct properties e.g. wall, glass, steel, void, are applied to the various elements defined by these vertices/edges/faces and analysis of meshes automatically generated from point cloud information in this way would tend to fail or may not converge.

In accordance with a further aspect of the present invention, once a boundary of a building has been determined in the x,y plane, for example, as described for the above embodiments, the boundary line is divided horizontally into what will be a number of columns, preferably of uniform width w, extending in the z direction. So for example, it will be appreciated that the plane of the rectangle 120 in Figure 12 can be identified from point cloud information and this rectangle can be divided into columns. The columns are further divided into rows, preferably of uniform depth d, to thereby create an array of cells extending upwardly in the z direction from the building boundary. With some depth tolerance out of the plane of the array, each cell of the resultant array, which corresponds to a cuboid or other regular geometric shape in which a point of the point cloud appears, is designated as solid, whereas cells which do not bound a point (or less than a threshold number of points) are designated as void or glass.

Data for vertices, edges and faces are then generated for solid cells of the surface and optionally for non-solid cells of the surface and these can be written directly as a mesh, which can be provided subsequently to off-the-shelf FE/FD/DE analysis tools, for example, ANSYS (http://www.ansvs.com/products/default.asp), for processing.

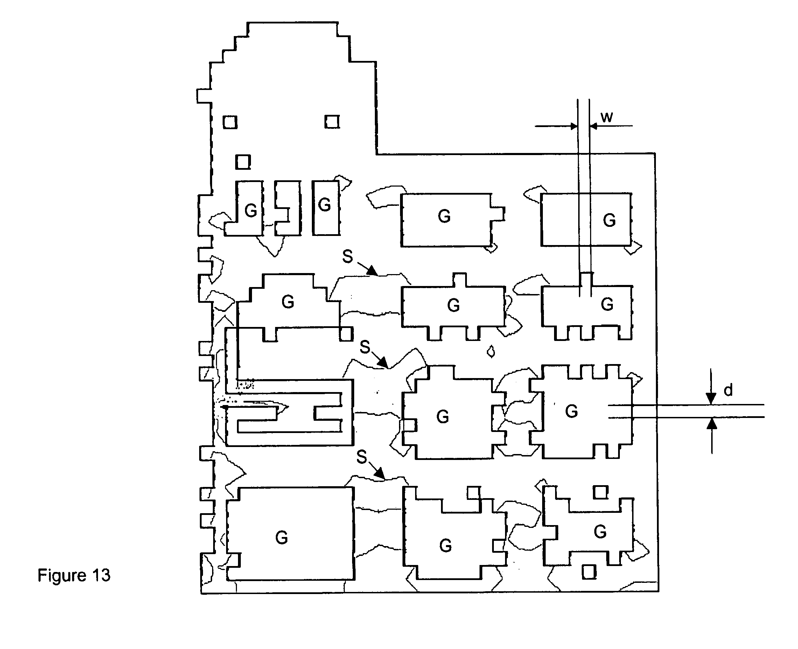

In the example, of Figure 13, the mesh generated from the surface points of the building has been subjected to stress simulation. The shaded areas, some of which are labelled S indicate areas of the building likely to be subjected to elevated stress, primarily because they surround areas of the surface labeled G comprising windows.

In an alternative implementation of the above technique, an entire point cloud subspace is first voxelized i.e. divided into cuboids. Any cuboids of the subspace including more than a threshold number, e.g. 0, of point cloud points are designated as solid and those not including this number of points are designated as glass surfaces or voids. A plane may be selected from the subspace, either automatically through detecting which cuboids lie above a detected building boundary, or even through a user interacting with a graphic user interface application displaying the solid cuboids of the space and selecting the required plane (or slice). Once this plane is selected, the mesh for the solid and/or glass/void elements of the plane can be generated and provided to an FEM or DEM analysis program for processing.

In both of the above cases, as the data set of elements or cuboids is traversed, before an entry for each element/cuboids can be written to the mesh file, each vertex, edge and face of the cube should be checked against the data set to see if that data already exist within the mesh file. While this is simple for vertices, each edge should be checked in each of the two possible orientations (A to B and B to A) and depending on the previous existence of an edge, and in what orientation, different actions must then be taken. The same sort of reasoning applies to faces, although this can be more complex where the volumes are not cubes. In either case, a list of unique vertices, unique (oriented) edges, unique (oriented) faces, and volumes is output in a way that the FE/FD/DE analysis engine can read it.

While the above examples relate to the FE analysis of a 2-D mesh, it will be seen that slices through the subspace of more than 1 cuboid in depth can be taken and 3-dimensional mesh information can be extracted and generated from the point cloud for analysis.

Both 2-D and 3-D mesh information can be used in other applications including: assessing the effects on a building or entire street of tunneling or pollution; analyzing security related issues including blast wave or noise progation; real estate or urban planning; or disaster management.

A voxelisation model created from LiDAR data as described above can generate large numbers of small, equi-sized cuboids, from which the finite element meshes are subsequently generated. The resulting mesh fineness may not be desirable because of long run times and computational storage requirements, and for example, may not be needed for areas of low anticipated stress concentrations. To overcome such shortcomings, prior to mesh generation, the voxelisation model can be glued i.e. adjacent cuboids can be merged with one another. Once this step is complete, an adaptive mesh procedure based on discretization error can be subsequently adopted to generate finite element meshes.

In the accompanying claims, it will be appreciated that the order of steps claimed is not necessarily limiting and steps may be performed in any appropriate order.

**Claims**

1. A method for detecting outlines of buildings from aerially acquired data, said data comprising a plurality of points, each comprising an (x,y,z)-tuple, said method comprising the step of:

   a) defining a reference plane,
   b) dividing said reference plane into an array of bins;
   c) mapping (12) each point of said image data to a bin of said reference plane;
   d) applying (14) a discrimination function to each bin to provide a scalar value for said bin, and
   e) determining (16, 22) outlines of buildings from said scalar values, wherein said scalar value is proportional to the number of points mapped to a given bin and a distance or height difference between a first point mapped to said bin maximally spaced from said reference plane and a second point mapped to said bin minimally spaced from said reference plane.

2. A method according to claim 1, wherein said reference plane is a horizontal plane.

3. A method according to claim 1, wherein said scalar value is inversely proportional to the largest height difference found in any bin of said array.

4. A method according to claim 1, wherein said scalar value is inversely proportional to the maximum number of points found in any bin of said array.

5. A method as claimed in claim 1, wherein said discrimination function f is defined as:

$$f_D(n, \Delta z) = \frac{n e^{(\Delta z / \Delta z\, max)}}{n_{max}}$$

where n is the number of points in the bin, $\Delta z$ is the height difference between the maximally and minimally spaced points in the bin, $n_{max}$ is the maximum number of points found in any bin, and $\Delta z_{max}$ is the largest height difference found in any bin of said array.

6. A method according to claim 1 wherein said determining outlines of buildings comprises applying a Hough or Radon transform to said scalar values.

7. A method according to claim 1 wherein said dividing is dependent on an expected number of points per bin.

8. A method according to claim 1 wherein

   - said reference plane is a 45° plane and said method is arranged to identify bins on the roofs of buildings, or
   - said scalar value for a bin is proportional to the regularity of the spacing of the points mapped to the bin from one another.

9. A method according to claim 1, wherein said data is acquired through successively scanning a terrain across a plurality of scan lines by periodically offsetting emitted laser pulses at fixed angular increments along said scan line and acquiring respective return information for said pulses.

10. A method according to claim 9 further comprising:

   - prior to applying said discrimination function, analyzing return information for each pulse to identify pulses for which a return has not been received; and for any such pulses, interpolating return Information for pulses of said scan line to add a return point to said acquired data, or
   - analyzing return information for each pulse to identify pulses for which more than one return has been received; and for any such pulses, adjusting said scalar value for a location in said reference plane to indicate a decreased likelihood of said location including a building.

11. A method according to claim 9, wherein said applying a discrimination function comprises applying said discrimination function to points for successive scan lines to determine whether any points of a scan line lie on an outline of a building.

12. A method according to claim 1, wherein each point of said image data includes an indication of a time as which said point was acquired and wherein said step of applying a discrimination function comprises successively applying said discrimination function to points acquired at substantially the same time to determine whether any points acquired at respective times lie on an outline of a building.

13. A method for generating a mesh of elements from aerially acquired building data, said data comprising a plurality of points, each comprising an (x,y,z)-tuple and at least some of which substantially coincide with a surface of a building, said method comprising the steps of;

f) selecting at least a plane within the space occupied by said points, including identifying a boundary of a building as a line in a reference plane according to any previous claim, said selected plane extending orthogonally from said reference plane through said boundary line;
g) dividing said plane into an array of cells;
h) identifying cells of said array containing more than a threshold number of points; and
i) for each identified cell, generating corresponding data in a mesh file indicating said cell corresponds with a solid surface of a building.

14. A method according to claim 13 wherein said mesh file data comprises data corresponding to the vertices, edges and faces of said identified cells.

15. A method according to claim 13 wherein said method comprises:

voxelizing the space occupied by said points to divide said space into a plurality of cuboids;
selecting cuboids within said space containing more than a threshold number of points; and
wherein said identified cells comprise selected cuboids of said voxelized subspace intersecting with said selected plane.

**Patentansprüche**

1. Verfahren zur Detektierung von Umrissen von Gebäuden mithilfe von aus der Luft erfassten Daten, die mehrere Punkte, jeder ein (x,y,z)-Tupel aufweisend, aufweisen, wobei das Verfahren den folgenden Schritt aufweist:

a) Definieren einer Referenzebene,
b) Aufteilen der Referenzebene in ein Array von Bins;
c) Kartieren (12) jedes Punkts der Bilddaten in einen Bin der Referenzebene;
d) Anwenden (14) einer Diskriminationsfunktion bei jedem Bin, um einen skalaren Wert für den Bin zu erhalten, und
e) Bestimmen (16, 22) von Umrissen von Gebäuden anhand der skalaren Werte für den Bin, wobei der skalare Wert proportional ist zur Anzahl Punkte, die für einen vorgegebenen Bin kartiert sind, und zu einem Abstands- oder Höhenunterschied zwischen einem ersten Punkt, der für einen zur Referenzebene maximal beabstandeten Bin kartiert ist, und einem zweiten Punkt, der für einen zur Referenzebene minimal beabstandeten Bin kartiert ist.

2. Verfahren nach Anspruch 1, wobei die Referenzebene eine Horizontalebene ist.

3. Verfahren nach Anspruch 1, wobei der skalare Wert umgekehrt proportional zum größten in einem Bin des Arrays gefundenen Höhenunterschied ist.

4. Verfahren nach Anspruch 1, wobei der skalare Wert umgekehrt proportional zur maximalen Anzahl der in einem Bin des Arrays gefundenen Punkte ist.

5. Verfahren nach Anspruch 1, wobei die Diskriminationsfunktion definiert ist als:

$$f_D(n, \Delta z) = \frac{ne^{(\Delta z / \Delta z \max)}}{n_{max}}$$

wobei n die Anzahl von Punkten im Bin, $\Delta z$ den Höhenunterschied zwischen den maximal und minimal beabstandeten Punkten im Bin, $n_{max}$ die maximale Anzahl von in einem Bin gefundenen Punkten und $\Delta z_{max}$ den größten in einem Bin des Arrays gefundenen Höhenunterschied bezeichnet.

6. Verfahren nach Anspruch 1, wobei das Bestimmen von Umrissen von Gebäuden die Anwendung einer Hough- oder Radon-Transformation zu den skalaren Werten aufweist.

**7.** Verfahren nach Anspruch 1, wobei das Aufteilen abhängig ist von einer erwarteten Anzahl von Punkten je Bin.

**8.** Verfahren nach Anspruch 1, wobei

- die Referenzebene eine 45°-Ebene ist und das Verfahren darauf ausgerichtet ist, Bins auf den Dächern von Gebäuden zu identifizieren, oder
- der skalare Wert für einen Bin proportional zur Regelmäßigkeit des Abstandes der Punkte ist, die zum Bin von einem anderen kartiert sind.

**9.** Verfahren nach Anspruch 1, wobei die Daten erfasst werden durch sukzessives Scannen eines Geländes über mehrere Scanlinien durch periodisches Offset von emittierten Laserpulsen bei festen Winkelinkrementen entlang der Scanlinie und Erfassen der jeweiligen Rückinformation über die Pulse.

**10.** Verfahren nach Anspruch 9, ferner aufweisend:

- vor der Anwendung der Diskriminationsfunktion Analysieren der Rückinformation für jeden Puls, um Pulse zu identifizieren, für die keine Rückinformation erhalten worden ist; und für jeden solchen Puls Interpolieren der Rückinformation von Pulsen der Scanlinie, um den erfassten Daten einen Rückpunkt hinzuzufügen, oder
- Analysieren der Rückinformation für jeden Puls, um Pulse zu identifizieren, für die mehr als eine Rückinformation erhalten worden war; und für jeden solcher Pulse Anpassen des skalaren Werts für einen Ort auf der Referenzebene, um die verringerte Wahrscheinlichkeit, dass dieser Ort ein Gebäude aufweist, anzuzeigen.

**11.** Verfahren nach Anspruch 9, wobei die Anwendung einer Diskriminationsfunktion die Anwendung der Diskriminationsfunktion auf Punkte für sukzessive Scanlinien umfasst, um festzustellen, ob irgendwelche Punkte einer Scanlinie auf einem Umriss eines Gebäudes liegen.

**12.** Verfahren nach Anspruch 1, wobei jeder Punkt der Bilddaten eine Anzeige über einen Zeitpunkt, zu dem der Punkt erfasst worden war, aufweist, und wobei der Schritt der Anwendung der Diskriminationsfunktion eine sukzessive Anwendung der Diskriminationsfunktion auf Punkte, die im Wesentlichen zum gleichen Zeitpunkt erfasst worden sind, aufweist, um zu bestimmen, ob zu den jeweiligen Zeitpunkten erfasste Punkte auf einem Umriss eines Gebäudes liegen.

**13.** Verfahren zur Erzeugung eines Netzes von Elementen von aus der Luft erfassten Gebäudedaten, wobei die Daten mehrere Punkte aufweisen, die jeweils ein (x,y,z)-Tupel aufweisen, und von denen mindestens einige im Wesentlichen mit einer Fläche eines Gebäudes zusammenfallen, wobei das Verfahren folgende Schritte umfasst:

f) Auswählen mindestens einer Ebene innerhalb des von den Punkten belegten Raumes, einschließlich Identifizieren einer Grenze eines Gebäudes als eine Linie in einer Referenzebene gemäß einem vorhergehenden Anspruch, wobei sich die ausgewählte Ebene orthogonal von der Referenzebene durch die Grenzlinie erstreckt;
g) Aufteilen der Ebene in ein Array von Zellen;
h) Identifizieren von Zellen des Arrays, die mehr als eine Mindestanzahl von Punkten enthalten; und
i) für jede identifizierte Zelle Erzeugen entsprechender Daten in einer Netzdatei, die angibt, dass die Zelle einer festen Fläche eines Gebäudes entspricht.

**14.** Verfahren nach Anspruch 13, wobei die Netzdateidaten Daten aufweisen, die den Eckpunkten, Kanten und Flächen der identifizierten Zellen entsprechen.

**15.** Verfahren nach Anspruch 13, wobei das Verfahren eine Voxelization des von den Punkten belegten Raums aufweist, um den Raum in mehrere Kuboide aufzuteilen;
Auswählen von Kuboiden innerhalb des Raums, die mehr als eine Mindestanzahl von Punkten enthalten; und
wobei die identifizierten Zellen ausgewählte Kuboide des voxelisierten Unterraums aufweisen, die die ausgewählte Ebene schneiden.

## Revendications

**1.** Procédé pour détecter des plans de bâtiments à partir de données acquises de manière aérienne, lesdites données comprenant une pluralité de points, chacun comprenant un (x,y,z)-tuple, ledit procédé comprenant les étapes de :

a) définition d'un plan de référence,
b) division dudit plan de référence en réseau de cases ;
c) mappage (12) de chaque point desdites images de données en une case dudit plan de référence ;
d) application (14) d'une fonction de discrimination à chaque case pour fournir une valeur scalaire pour ladite case, et
e) la détermination (16, 22) de plans de bâtiments à partir desdites valeurs scalaires, où ladite valeur scalaire est proportionnelle au nombre de points établis pour une case donnée et une différence de distance ou de hauteur entre un premier point établi vers ladite case espacée au maximum dudit plan de référence et un second point établi vers ladite case espacée au minium dudit plan de référence.

2. Procédé selon la revendication 1, où ledit plan de référence est un plan horizontal.

3. Procédé selon la revendication 1, où ladite valeur scalaire est inversement proportionnelle à la plus grande différence de hauteur trouvée dans n'importe quelle case dudit réseau.

4. Procédé selon la revendication 1, où ladite valeur scalaire est inversement proportionnelle au nombre de points maximum trouvé dans n'importe quelle case dudit réseau.

5. Procédé selon la revendication 1, où ladite fonction de discrimination f est définie comme :

$$f_D(n, \Delta z) = \frac{n e^{(\Delta z / \Delta z \, max)}}{n_{max}}$$

où n est le nombre de points dans la case, $\Delta z$ est la différence de hauteur entre les points espacés au maximum et au minimum dans la case, $n_{max}$ est le nombre maximum de points trouvés dans n'importe quelle case, et $\Delta z_{max}$ est la plus grande différence de hauteur trouvée dans n'importe quelle case dudit réseau.

6. Procédé selon la revendication 1 où la détermination desdits plans de bâtiments comprend l'application d'une transformée de Hough ou Radon auxdites valeurs scalaires.

7. Procédé selon la revendication 1 où la division est dépendante du nombre de points prévu par case.

8. Procédé selon la revendication 1 où

- ledit plan de référence est un plan à 45° et ledit procédé est arrangé pour identifier des cases sur les toits des bâtiments, ou
- ladite valeur scalaire pour une case est proportionnelle à la régularité de l'espacement des points établis pour la case l'un de l'autre.

9. Procédé selon la revendication 1 où lesdites données sont acquises par successivement une sélection d'un terrain sur une pluralité de lignes de balayage en compensant périodiquement des impulsions laser émises à des incréments angulaires fixes le long de ladite ligne de balayage et en acquérant des informations de retour respectives pour lesdits impulsions.

10. Procédé selon la revendication 9 comprenant en outre :

- avant d'appliquer ladite fonction de discrimination, analyse des informations de retour pour chaque impulsion pour identifier les impulsions pour lesquelles un retour n'a pas été reçu ; et pour ces impulsions, l'interpolation des informations de retour pour les impulsions desdites lignes de balayage pour ajouter un point de retour auxdites données acquises, ou
- analyse des informations de retour pour chaque impulsion pour identifier les impulsions pour lesquelles plus d'un retour a été reçu ; et pour ces impulsions, régler ladite valeur scalaire pour un emplacement dans le dit plan de référence pour indiquer une probabilité réduite dudit emplacement incluant un bâtiment.

11. Procédé selon la revendication 9, où ladite application d'une fonction de discrimination comprend l'application de ladite fonction de discrimination aux points pour les lignes de balayage successives pour déterminer si tout point d'une ligne de balayage repose sur un plan d'un bâtiment.

12. Procédé selon la revendication 1 où chaque point desdites données d'image inclut une indication d'un moment où ledit point a été acquis et où ladite étape d'application d'une fonction de discrimination comprend l'application successivement de ladite fonction de discrimination aux points acquis quasiment au même moment pour déterminer si tout point acquis aux moments respectifs repose sur un plan d'un bâtiment.

13. Procédé pour générer un réseau d'éléments à partir de données de bâtiment acquises de manière aérienne, lesdites données comprenant une pluralité de points, chacun comprenant un (x,y,z)-tuple et au moins certains d'entre eux coïncidant quasiment avec une surface d'un bâtiment, ledit procédé comprenant les étapes de ;

f) sélection d'au moins un plan dans l'espace occupé par lesdits points, incluant l'identification d'une limite d'un bâtiment comme une ligne dans le plan de référence selon l'une quelconque des revendications précédentes, ledit plan sélectionné s'étendant orthogonalement dudit plan de référence par ladite ligne de limite ;

g) division dudit plan en réseau de cellules ;
h) identification des cellules dudit réseau contenant plus d'un nombre de points de seuil ; et
i) pour chaque cellule identifiée, la génération des données correspondantes dans un fichier réseau indiquant lesdites cellules correspondant avec une surface solide d'un bâtiment.

**14.** Procédé selon la revendication 13 où lesdites données du fichier réseau correspondant aux vertices, arêtes et faces desdites cellules identifiées.

**15.** Procédé selon la revendication 13 où ledit procédé comprend :

la voxelisation de l'espace occupé par lesdits points pour diviser ledit espace en une pluralité de cuboïdes ;
la sélection des cuboïdes dans ledit espace contenant plus d'un nombre de points de seuil; et où lesdites cellules identifiées comprennent des cuboïdes sélectionnés dudit sous-espace voxelisé intersectant avec ledit plan sélectionné.

Scanner

$d_2$   $d_1$

Figure 1

**(a)**

Input — Point Cloud [10]

Processing — Map to Grid [12]

Extraction [14]

Hough Transform [16]

Output — Building Outlines [22]

**(b)**

Point Cloud [10']

Map to Grid [12']

Pulse Analysis [26]

Scan Line Analysis [24]

Extraction [14']

Hough Transform [16]

Building Outlines [22]

Figure 2

EP 2 304 688 B1

Figure 3

EP 2 304 688 B1

Figure 4

Figure 5(a)

Depth Image

Height Difference

Invention

Figure 5(b)

EP 2 304 688 B1

Figure 6

Figure 7(b)

Figure 7(a)

Figure 8

Figure 9

Figure 10

Figure 11

EP 2 304 688 B1

Figure 12

Figure 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V.VERMA et al.** 3D Building Detection and Modeling from Aerial LIDAR Data. *CVPR,* 2006

- **R.TSE et al.** Using the Delaunay Triangulation/ Voronoi Diagram to extract Building Information from Raw LIDAR Data. *ISDV,* 2007